# EUROPEAN PATENT SPECIFICATION

(11) **EP 2 522 502 B1**
(45) Date of publication and mention of the grant of the patent: **20.08.2014**
(21) Application number: 11165668.2
(22) Date of filing: 11.05.2011
(51) Int. Cl.: B32B 5/18, B32B 5/24, E04B 1/94

(54) **Reinforcing and flame protection lamination for cellular polymers**
Verstärkungs- und Flammschutzbeschichtung von zellulären Polymeren
Stratification de protection contre les flammes et de renfort pour polymères cellulaires

(43) Date of publication of application: 14.11.2012
(73) Proprietor: Armacell Enterprise GmbH & Co. KG, 12529 Schönefeld OT Waltersdorf (DE)
(72) Inventor: Zauner, Christoph, 48147 Münster (DE); Weidinger, Jürgen, 48167 Münster (DE); Klusmann, Daniel, 48143 Münster (DE)
(74) Representative: von Füner, Nicolai

(56) References cited:
- EP-A1- 2 116 753
- CH-A5- 650 196
- DE-A1- 3 702 639
- DE-A1-102005 058 381
- US-A- 4 874 648

## Description

The present invention relates to a multi-layer system for reinforcing, fire protection and smoke suppression purposes of cellular organic polymers, leading to improved strength together with fire retardant properties and low smoke generation, the process for manufacturing of such multi-layer system, the application of such multi-layer system on expanded organic polymers and the use of such multi-layer system and resulting composites.

Cellular or expanded organic polymeric structures are important for a lot of fields of application, such as thermal and acoustic insulation, vibration damping, lightweight construction, etc. (see e.g. brands Armaflex®, K-Flex®. However, as such materials are of organic nature and cellular polymers are furthermore more sensitive to ignition than massive polymers, said expanded polymers tend to be flammable to very flammable. On the other hand, such cellular polymers containing no flame retardants sometimes only create low levels of smoke, due to their "clean" and complete combustion. In contrast, the use of flame retardants for cellular polymers (e.g. halogenated flame retardants like decabromodiphenylethane, chlorinated paraffin, etc.) shows a high level of smoke creation and smoke density which became an issue of discussion during recent years.

Additionally, the loading of polymer compounds with flame retardant and/or diluting fillers, additives, etc. only has a retarding, but not a preventing effect and will impact the expansion or foaming of the polymers (e.g. nucleation, density) as well as other final properties targeted for the application, e.g. thermal conductivity, water vapour transmission blocking or mechanical properties like tensile strength, elongation at break, etc.

Consequently, the organic polymer will continue burning in case of fire and/or flashover (where temperatures easily reach several hundred °C permanently) no matter how much flame retardant agents had been applied, and the situation will get even worse when speaking about an organic foam where oxygen for accelerating the combustion is permanently present within the cells, the cell walls are thin and expose a high surface area and therefore are easy to attack and decompose.

Numerous attempts have been taken to improve the fire retardancy of organic polymer foams, such as by using aluminium foil in between the foam and a scrim being made of yarns which are not flammable (as in US 4073998). In the current invention the outermost layer is a metallic gauze being thermal conductive. In case of fire the heat can be dispersed, thus, improving - especially long term - fire resistance.

DE 10 2005 058381 A1 refers to a vehicle seat for vehicles used for local public transport with a polymeric foam core, an inner protective and fire blocking nonwoven fibrous layer and an outer protective layer which comprises a metallic gauze. CH 650 196 A5 refers to a wall covering material comprising a rear foam, a perforated aluminum foil and a flame retardant outermost layer. US 4 874 648 A refers to a foam which is flame resistant itself, and a face sheet, wherein the face sheet is applied for mechanical protection purposes and handling properties and wherein any suitable material can be used.

In another invention (US 4279958) a composite panel comprises at least one cellular layer, an organic layer as an outermost layer and an inorganic layer in between. In contrast, in the current invention the outermost layer is inorganic metallic gauze. A further invention (WO90/14944) claims a heat barrier laminate comprising two insulation layers with a metal layer in between. Optionally the laminate comprises a second metal foil as the outermost layer as a heat barrier. The difference to the current invention is that either two insulation materials are the outermost layers or one insulation layer and a metal foil are the outermost layers. In a case of fire either the insulation layer or the metal foil will be directly attacked. Thus, the metal foil will break - either by sheer heat and/or by pressure build-up and breakthrough of decomposition products of the organic compound - leading to a flashover which results in worse fire resistance. In contrary, in the current invention the outermost layer is inflammable which leads to the advantage that the insulation board has excellent long term fire protective properties. Another advantage of the current invention is the reinforcing property of the metallic gauze. It is also of particular advantage that the claimed multi-layer system protects the cellular material in case of fire from dripping off and falling off of parts of the multi-layer system.

A major object of the present invention is to provide a reinforcing and stabilizing fire protection multi-layer system that is versatile, reliable, economic and easy to apply. The lamination of such multi-layer system fulfils modem regulations in the respective application fields by dispersing flame and its heat to a maximum possible extent before it can reach or be transferred to the cellular substrate, suppressing the formation of smoke and stabilizing the cellular polymer to prevent dripping, bending and falling down of parts of the cellular polymer.

Surprisingly, it is found that such a versatile multi-layer system not showing the aforementioned disadvantages can be achieved when using an expanded metal, a metallic gauze, i. e. metallic tissue, metallic mesh, metallic nonwoven, metallic fabric, etc. (hereafter referred to as metallic gauze) with a metal foil layer underneath, all with appropriate properties for flame spread, heat dispersion and reinforcement as well as protection. "Fibre" in the context of this invention means fibres, slivers and chips of a length to width ratio of at least 10:1.
Information about mesh sizes and sieve opening is always not related to unwoven or other materials, where a specification is impossible.

### Brief description of the drawings:

Fig. 1 is a schematic drawing of a possible setup of the claimed multi-layer system;
Fig. 2 is a schematic drawing of an additional insulation layer caused by the gas pressure of the combustible gases.

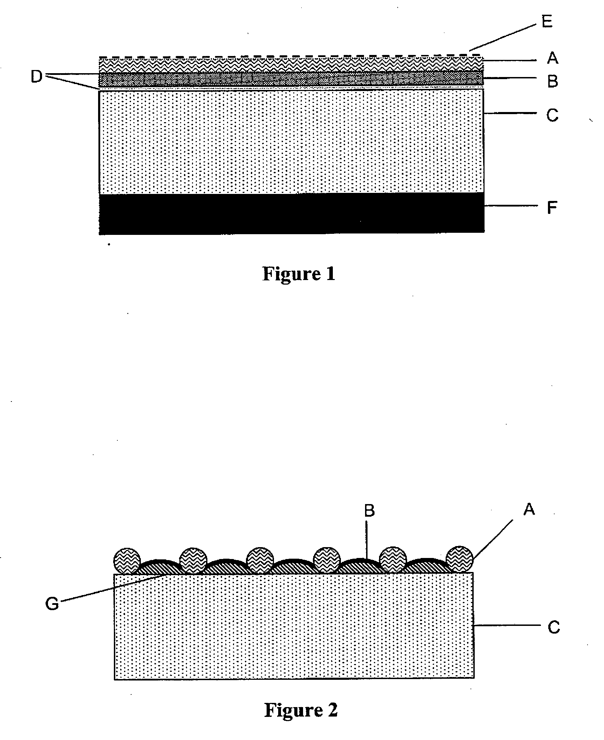

The claimed multi-layer system comprises at least one layer (A) of metallic gauze. The layer is located on the outer surface of the inner protective layer (B), see fig. 1. Additional layers (A) can also be applied as outermost protective layer on all surfaces of the substrate that bear the possibility of fire exposition.
The average mesh size or sieve opening of layer (A) would be 0.01 to 3.00 mm, preferred 0.04 to 2.00 mm, especially preferred from 0.10 to 1.00 mm, the wire gauge (diameter of the wire) is 0.01 to 3.00 mm, preferably 0.05 to 1.00 mm, especially preferred 0.10 to 0.50 mm. The mesh opening in the context of the invention means the spacing between adjacent warp or weft threads. Each surface area of the mesh opening is from 0.001 to 10.000 mm², preferably from 0.005 to 6.000 mm², especially preferred from 0.010 to 4.000 mm². These mesh openings between the wires of the metallic gauze ensure to achieve the required flame protection properties (B s1 d0 and/or B s2 d0 according to EN 13823) and reinforcing characteristics while being economic.
The wire may be massive or hollow (to reduce the density) and can be surface treated, e.g. corrosion protection (tin, zinc, anti-corrosion varnish, phosphate coating, etc.), (plastic) coating, etc. The wire may be flat on one or more sides, like single-sided flat screens, square wire etc., e.g. to improve adhesion to further layers. The wire can show a structured or smooth surface and can be corrugated or jagged. To improve the mechanical stability the metallic gauze can be produced with additional scrims not touching a cross wire, i.e. crimped screens.
The metallic gauze can show all shapes of meshes, preferably square or rectangular. The metallic gauze can be of aluminium, steel, iron, copper, tin, zinc, brass, lead or nickel, preferred are steel and iron due to temperature resistance, costs and availability.

The claimed multi-layer system furthermore contains layer (B), see. fig. 1, as second outermost layer, i.e. inner protective layer, which is comprising at least one layer of non-perforated metal foil.
The metal foil can be of aluminium, steel, iron, copper, tin, zinc or nickel, preferred is aluminium due to its high heat conductivity, good sealing/barrier properties, excellent properties concerning the application (bonding/adhesion compatibility etc.), low costs and good availability. The thickness range for the metal foil is 1 to 400 microns, preferably 2 to 100 microns, especially preferred 2 to 50 microns.

The claimed multi-layer system comprises a substrate layer (C) underneath layer (A) and (B), see fig. 1, which is comprising at least one layer of cellular polymer in a crosslinked and/or non-crosslinked state. The polymers can be thermoplastics (e.g. polyolefins, polyesters including polyurethanes and PET/PBT, polyethers), thermosets (resins, e.g. phenolic, acrylic, melamine based), thermoplastic elastomers (including PVC, PUR), elastomers (with backbones containing carbon only, or additionally oxygen, silicon, etc., e.g. ACM/AEM, AU/EU, BR, BIIR, CIIR, CM/CPE, CR, CSM/CSR, (G)(E)CO, EPM/EPDM, EVM, FKM/F(E)PM, GPO, IR, IIR, (V)MQ, (H)NBR, NR, SBR, T), lattices or any combinations thereof. Preferred are polyesters, elastomers and PVC, especially preferred are PET, PBT, PEI, PVC, EPDM, SBR, NBR and CR and any combinations thereof with a share of at least 50% by weight in relation to the total polymer content.

The substrate compound(s) forming substrate layer (C) may additionally contain any combination of fillers, fibres, crosslinking systems, plasticizers, stabilizers, colorants, physical or chemical foaming agents and any other additives that are used in the rubber and plastics industry, and may be existing as separate layers or as one layer comprising blends of materials, means (C) comprises at least one expanded layer and optionally at least one unexpanded layer.
The polymer is expanded to a closed cell, open cell or mixed cell foam or sponge. Preferred is closed cell foam with a closed cell content of at least 80% and a density of less than 200 kg/m³, preferably less than 150 kg/m³, especially preferred less than 100 kg/m³ according to ISO 845 to lower the thermal conductivity to less than 0.080 W/m*K at a temperature of 0 °C, preferably less than 0.040 W/m*K at a temperature of 0 °C, according to EN ISO 12667 / EN ISO 8497.
Substrate layer (C) may show surface structures on one or both sides for sound and/or thermal decoupling purposes as well as for increasing the surface to adhere other layers to be applied. The structure can be of any shape, such as triangular, sinus shape, rectangular, trapezoidal, (semi)circular (semi)multi-edge (e.g. honeycomb), etc., and any combinations thereof. The structure of any shape can be applied in two dimensional manner, as e.g. ridges or tubes, or in three dimensional manner, as e.g. knobs, and any combinations thereof; the structure can be applied longitudinally or transversally or in any combinations thereof. This can be achieved by extrusion, embossing, deep-drawing, moulding, by applying the structure directly or by applying it onto a carrier (layer), in cold, warm or hot state, or in any combination of applicable methods. Accordingly, layers (B) and (A) on top of (C) can exhibit surface structures, too.

The claimed multi-layer system may comprise at least one suitable system for adhesion (D) to bond the layers (A), (B) and (C) to each other (see fig. 1). Preferred are adhesion systems that are either fully compatible to the layers and/or preferably with intrinsic flame retardant properties. Especially preferred are adhesives containing halogenated or phosphorous compounds, e.g. being based on elastomers such as chloroprene, PVC or CPE, hotmelts, or adhesives of low to no flammability, such as silicate based adhesives like alkali silicate ("water glass") systems. The adhesion system (D) does not have to be of the same composition for bonding the layers (A)/(B) and (B)/(C), respectively, and can be freely chosen to match the individual requirements best possible. Adhesion between the layers (A) and (B) or (B) and (C) can also be carried out by melting down one layer into another, melt-adhering or by connecting the layers mechanically.

The claimed multi-layer system furthermore may comprise one or more additional functional layer(s) (E) as covering on (A) to act e.g. as a shielding, a reinforcing or as a decorative layer, see fig 1. Preferred are layers that will either be flame-retardant themselves or easily be burning or melting away so not to disturb the functioning of the (A) (B) (C) multi-layer system. The layer(s) (E) may be bond to layer (A) of the multi-layer system in the same manner as listed for the adhesion between (A), (B) and (C).

The claimed multi-layer system furthermore may comprise one or more further element(s) (F) necessary for the intended application, such as wire inlays in case of cables or the like, massive parts such as wood, glass, metal or concrete structures for building purposes etc., see fig. 1. The compound(s) (F) may be bond to other compounds in the same manner as listed for the adhesion between (A), (B) and (C).

A major advantage of the claimed multi-layer system is its suitability for applications in safety related environment where low flame spread and low smoke generation are required (e.g. according to ASTM E-84, EN 13823/EN 13501-1). The performance ranging from flame-retardant to even flame-preventing is provided by the special effect that the layers of the claimed multi-layer system will generate on the formation and on the migration of flammable gases in combination with the flame and heat dispersion, according to our results:
1) When hitting the metallic gauze layer (A) the flame is scattered and dispersed over the surface. The net heat creation per surface unit thus is lowered in comparison to smooth and/or closed surfaces, such as foils or sheets. Also the heat penetration into the composite is lower due to the mentioned dispersion, but also due to the good heat conductivity, i.e. good heat dissipation. In comparison to metal foils metallic gauzes show higher strength at comparable grammages or specific weight, therefore, less material is needed. Additionally, metallic gauze enables a controlled and slow release of combustible gases (in case of a sharp gas pressure within the multi-layer system), possibly formed by the inner layers of the present multi-layer system. Thus, a breakdown of layer (A) and (B) can be prevented, which would lead to uncontrollable release of combustible gases resulting in a flashover. Additionally, fire protection is created between the single wires of the metallic gauze layer (A) by hot air entrapped in between the wires. Furthermore, the layered structure of metallic gauze promotes thermal convection in between the wires (i.e. circular convection) and therefore supports the forming of hot air fire-shielding.
2) When approaching the second layer (B) the already weakened heat and flame will be further reduced by following effects:
   a) reflection by the metal foil. In case the heat would penetrate into the expanded polymer this would decompose to combustible gases that will either be entrapped by the foil (tear of the foil due to gas pressure is prevented by the outer metallic gauze layer (A), a performance which is also not provided by prior art) and thus being kept away from possible flashover;
   b) the metal foil will slow down the migration of these gases to the surface or flame front and/or dilute said gases into the matrix to keep them below a critical limit per volume or surface unit;
   c) the metal foil will melt into the metallic gauze layer (A)(see fig. 2) and form a kind of a "hemisphere" in between the meshes due to the higher temperature of the wire of the metallic gauze in comparison to area in between. This hemisphere is caused by the gas pressure of the combustible gases and leads to an insulation layer (G) in between layer (B) and (C).
As a consequence, the effects of 2) will prevent a flashover and together with 1) will result in a controlled, slow burn (slow, but supplied with sufficient oxygen, as it happens on the outer surface of the composite). This will not create much smoke in comparison with standard flame retardant systems that will lead to a "suppressed" burn (insufficient oxygen) with high smoke creation due to incomplete combustion (compare table 1).

It is a very prominent advantage of the claimed multi-layer system that reinforcement, fire protection and smoke suppression are achieved by one single system.

A linked advantage of the claimed multi-layer system is its flame retardancy which can be proved by the good results in the different fire tests. These good results are even almost independent from the cellular polymer (see table 3). According to EN 13823, the claimed multi-layer system is classified as B s2 d0, preferably as B s1 d0.

A further advantage of the claimed multi-layer system linked to aforementioned advantage is the fact that no additional measures have to be taken to render the substrate fire retardant (see e.g. PET in table 3).

It is of particular advantage that the claimed multi-layer system protects the cellular material from dripping off and falling off of parts of it in case of fire.

It is a further advantage of the claimed multi-layer system that it can be either diffusion-tight when using a metal foil.

It is another advantage of the claimed multi-layer system that, due to the structured surface of the metallic gauze, further materials can be easily applied, e.g. concrete, gypsum. Moreover, the metallic gauze reinforces the applied material (E) and decouples it from substrate layer (C).

It is a linked advantage of the claimed multi-layer system that substrate layer (C) can be combined with incompatible substances and materials, due to the fact that layer (A) and (B) can function as a barrier and linking layer.

It is an additional advantage that the claimed multi-layer system can easily be cleaned or treated, even with substances that would affect or damage layer (C) or (D), e.g. corrosive, acid or alkaline substances.

It is a linked advantage that the claimed multi-layer system is resistant against UV-light, ozone and weathering without any additional treatment or use of special additives in any layer.

A further advantage of the claimed multi-layer system is the antimicrobial performance of the surface without additional substances, treatments or coatings.

Another advantage of the claimed multi-layer system is the high mechanical strength, i.e. scratch resistance, impact resistance, puncture resistance, etc.

A further advantage of the claimed multi-layer system linked to aforementioned advantages is the fact that the insulating substrate layer (C) can therefore be used in critical surroundings and environments, e.g. chemical industry or food industry.

Another advantage of the claimed multi-layer system is that no fire retardants or thinning fillers, in particular halogenated fire retardants, are needed to achieve demanded flame resistance. Especially brominated flame retardants are critical for environmental issues and can generate toxic fumes in case of fire. For that reason brominated flame retardants are already partially prohibited.

This leads to a further advantage of the claimed multi-layer system which is the free and economic as well as ecologic choice for foam substrate and its ingredients.

A further advantage of the claimed multi-layer system is the fact that in its preferred compositions it is free of fibres, PVC and related additives (e.g. lead-based stabilisers, tin-compounds), being under survey and being discussed for environmental and health issues.

It is a particular advantage of the claimed multi-layer system that it can be electrically conductive, e.g. to prevent static charge, to be used as a lightning conductor or to be used as a low voltage power source for lights.

It is a linked advantage that the claimed multi-layer system can be free of plasticizers, e.g. phthalate plasticizers, phosphate plasticizers, chlorinated paraffin.

A further advantage of the claimed multi-layer system is that its flame retardant properties are almost independent from the geometry of the part to be fire protected.

A further advantage of the claimed multi-layer system is the possibility to adapt its properties to the desired property profile (concerning mechanics, damping, insulation, flexibility, etc.) by adaptation of the foil thickness and/or the metallic gauze (wire thickness, thieve opening, shape of meshes, etc.).

It is a linked advantage of the claimed multi-layer system that formed parts or prefabs can easily be constructed out of flexible cellular polymers, due to the fact that the curved wire gauze can stabilize the structure without any additional fixations.

It is a prominent advantage of the claimed multi-layer system that it can be produced in an economic way in a continuous process, e.g. by extrusion and co-lamination. It shows versatility in possibilities of manufacturing and application. It can be extruded, co-extruded, laminated, moulded, co-moulded, overmoulded, welded etc. directly as a multi-layer system and thus it can be applied in unrestricted shaping onto various surfaces in automotive, transport, aeronautics, building and construction, furniture, machinery engineering and many other industries, even by a thermoforming or other shaping methods following the manufacturing process of the insulating substrate layer (C).

It is a further advantage of the claimed multi-layer system that it can be transformed and given shape by standard methods being widespread in the industry and that it does not require specialized equipment.

Another advantage of the claimed multi-layer system is the fact that the insulating substrate layer (C) may contain scrapped or recycled material of the same or other kind to a very high extent (up to 100%) not losing its fire retardant properties.

A further advantage of the claimed multi-layer system is its application temperature from - 200°C to +400°C. This is only being determined by the expanded polymer. The claimed multi-layer system comprising expanded silicone elastomer (MVQ) as compound for substrate layer (C) can be used at a temperature of -100°C up to +300°C, or up to +400°C with thermoset foams.

A further advantage of the claimed multi-layer system is its suitability for thermal and sound/vibration insulation applications, wherein the metal foil acts as a vapour barrier and reflector and the fibres act as an additional insulation layer.

A further advantage of the claimed multi-layer system is its impact resistance against mechanical load, pressure, notch formation, cuts and bites, including attack by rodents or termites or the like, which is another advantage for outdoor insulation purposes.

### Examples

In the following examples and comparative examples the required foams were acquired on the market (NH = NH/Armaflex^{®}, AF = AF/Armaflex^{®}, HT = HT/Armaflex^{®}, Armacell GmbH, Münster; PET: ArmaFORM^{®} PET, Armacell Benelux S.A., Thimister-Clermont; GF = glass fibre fabric, Style 461, P-D Interglas Technologies Ltd., Sherborne; MG = metallic gauze, plain weave, mesh size 0,34 mm, diameter of the wire 0,16 mm, Beissermetall^{®}, Magstadt) or being produced according to state of the art procedures to 25 mm thickness samples. The protective layers were put on the foam parts by slight and constant pressure using adhesives or the like that were available on the market (Adhesive 520, Armacell GmbH, Münster). In the case of the comparative examples the layers were applied as close as possible to the processing provided by the respective literature. The thickness of the aluminium foil used in the following examples is 15 µm.

**Table 1: Flammability test results of cellular polymers of substrate layer (C) according to EN 13823 (best individual classifications: B s1 d0).**

| **Foam base** | **Protective layers** | **fire class** | **smoke class** | **droplets class** |
|---|---|---|---|---|
| Melamine | none* | C | s2 | d0 |
| | aluminium foil* | D | s2 | d0 |
| | **aluminium foil + MG** | **B** | **s1** | **d0** |
| HT | none* | D | s3 | d0 |
| | aluminium foil* | E | s3 | d0 |
| | GF* | D | s3 | d0 |
| | MG* | D | s3 | d0 |
| | sisal fibre* | D | s3 | d0 |
| | GF + sisal fibre* | D | s3 | d0 |
| | MG + sisal fibre* | D | s3 | d0 |
| | **sisal fibre + MG*** | **C** | **s2** | **d0** |
| | **GF + MG*** | **B** | **s2** | **d0** |
| | **aluminium foil + MG** | **B** | **s2** | **d0** |
| NH | none* | D | s3 | d0 |
| | aluminium foil* | E | s3 | d0 |
| | GF* | c | s3 | d0 |
| | **aluminium foil + MG** | **B** | **s1** | **d0** |
| AF | none* | B | s3 | d0 |
| | aluminium foil* | C | s3 | d0. |
| | GF* | C | s3 | d0 |
| | GF + aluminium foil* | C | s3 | d0 |
| | sisal fibre* | C | s3 | d0 |
| | GF + sisal fibre* | C | s3 | d0 |
| | MG + sisal fibre* | C | s3 | d0 |
| | **sisal fibre + MG*** | **B** | **s2** | **d0** |
| | **GF + MG*** | **B** | **s2** | **d0** |
| | **aluminium foil + MG** | **B** | **s1** | **d0** |
| PE | none* | E | s1 | d2 |
| | aluminium foil* | E | s2 | d2 |
| | **GF + MG*** | **B** | **s1** | **d0** |
| PET | none* | E | s2 | d2 |
| | aluminium foil* | E | s3 | d2 |
| | **GF + MG*** | **B** | **s1** | **d0** |
| | **aluminium foil + MG** | **B** | **s1** | **d0** |

| | | | | |
|---|---|---|---|---|
| *=comparative example | | | | |

**Table 2: Flammability test results of cellular polymers of substrate layer (C) of table 1 according to ASTM E84 standard.**

| **Foam base** | **Protective layers** | **Class** |
|---|---|---|
| HT | none* | 100/100 |
| | **alumimium foil + MG** | **25/50** |
| NH | none* | 100/75 |
| | **alumimium foil + MG** | **20/40** |
| AF | none* | 25/100 |
| | **alumimium foil + MG** | **20/50** |
| PET | none* | 150/250 |
| | **alumimium foil + MG** | **25/40** |

| | | |
|---|---|---|
| *=comparative example | | |

**Table 3: Fire test according to EN 13823/EN 13501-1 using the claimed multi-layer system (A) (B) with different cellular polymers of substrate layer (C), carried out on sheet-shaped material.**

| **Foam base** | **Protective layers** | **fire class** | **smoke class** | **droplets class** |
|---|---|---|---|---|
| Melamine | none* | C | s2 | d0 |
| | **aluminium foil + MG** | **B** | **s1** | **d0** |
| | **GF + MG*** | **B** | **s1** | **d0** |
| EPDM | none* | E | s3 | d0 |
| | **aluminium foil + MG** | **B** | **s2** | **d0** |
| | **GF + MG*** | **B** | **s2** | **d0** |
| NBR/PVC | none* | D | s3 | d0 |
| | **aluminium foil + MG** | **B** | **s1** | **d0** |
| | **GF + MG*** | **B** | **s2** | **d0** |
| NBR | none* | E | s2 | d0 |
| | **aluminium foil + MG** | **B** | **s1** | **d0** |
| | **GF + MG*** | **B** | **s2** | **d0** |
| SBR | none* | E | s3 | d0 |
| | **aluminium foil + MG** | **B** | **s2** | **d0** |
| | **GF + MG*** | **B** | **s2** | **d0** |
| MVQ | none* | D | s1 | d0 |
| | **aluminium foil + MG** | **B** | **s1** | **d0** |
| | **GF + MG*** | **B** | **s1** | **d0** |
| CR | none* | C | s2 | d0 |
| | **aluminium foil + MG** | **B** | **s1** | **d0** |
| | **GF + MG*** | **B** | **s1** | **d0** |
| PVC | none* | D | s3 | d1 |
| | **aluminium foil + MG** | **B** | **s2** | **d0** |
| | **GF + MG*** | **B** | **s2** | **d0** |
| PET | none* | E | s2 | d2 |
| | **aluminium foil + MG** | **B** | **s1** | **d0** |
| | **GF + MG*** | **B** | **s1** | **d0** |
| PET + flame retardant | none* | D | s3 | d1 |
| | **aluminium foil + MG** | **B** | **s1** | **d0** |
| | **GF + MG*** | **B** | **s1** | **d0** |
| PE | none* | E | s1 | d2 |
| | **aluminium foil + MG** | **B** | **s1** | **d0** |
| | **GF + MG*** | **B** | **s1** | **d0** |
| PP | none* | E | s1 | d2 |
| | **aluminium foil + MG** | **B** | **s1** | **d0** |
| | **GF + MG*** | **B** | **s1** | **d0** |

| | | | | |
|---|---|---|---|---|
| *=comparative example | | | | |

## Claims

1. A multi-layer system comprising an expanded polymer as substrate layer (C) being covered with at least one inner protective layer (B) comprising a non-perforated metal foil, and with at least one outer protective layer (A) comprising at least one metallic gauze.

2. The multi-layer system according to claim 1 wherein the surface area of the mesh opening of the metallic gauze layer (A) is from 0.001 to 10.000 mm², preferably from 0.005 to 6.000 mm², especially preferred from 0.010 to 4.000 mm² respectively, and wherein the diameter of the wire of layer (A) is 0.01 to 3.00 mm, preferably 0.05 to 1.00 mm, especially preferred 0.10 to 0.50 mm.

3. The multi-layer system according to anyone of claims 1-2 wherein layer (A) is comprising aluminium, steel, iron, copper, tin, zinc, brass, lead or nickel or any combination thereof, preferably steel or iron.

4. The multi-layer system according to anyone of claims 1-3 wherein layer (A) is surface treated to prevent damage or corrosion of the metallic gauze, preferably by using an anti-corrosion varnish, tin, zinc, phosphate and/or polymer coating.

5. The multi-layer system according to anyone of claims 1-4 wherein layer (B) is a metal foil comprising aluminium, steel, iron, copper, tin, zinc or nickel, preferably aluminium and wherein the thickness of the metal foil is 1-400 microns, preferably 2 to 100 microns, especially preferred 2-50 microns.

6. The multi-layer system according to anyone of claims 1-5 wherein substrate layer (C) has a density of less than 200 kg/m³, preferably less than 150 kg/m³, especially preferred less than 100 kg/m³ according to ISO 845.

7. The multi-layer system according to anyone of claims 1-6, wherein substrate layer (C) has a thermal conductivity of less than 0.080 W/m*K at a temperature of 0 °C, preferably less than 0.040 W/m*K at a temperature of 0 °C according to EN ISO 12667 / EN ISO 8497.

8. The multi-layer system according to anyone of claims 1-7 wherein additional layers are applied for reinforcement and/or decoration purposes.

9. A process for manufacturing the multi-layer system according to anyone of claims 1-8 in a continuous process, preferably in a continuous two-step-extrusion and lamination process.

10. The use of a multi-layer system according to anyone of claims 1-8 for thermal insulation, acoustic insulation, acoustic damping insulation, vibration damping insulation, fire protection insulation and/or smoke protection insulation.

## Patentansprüche

1. Mehrschichtsystem, umfassend ein geschäumtes Polymer als Substratschicht (C), die von mindestens einer inneren Schutzschicht (B) aus einer nichtperforierten Metallfolie und mindestens einer äußeren Schutzschicht (A) aus mindestens einem metallischen Netz bedeckt ist.

2. Mehrschichtsystem nach Anspruch 1, bei dem die spezifische Oberfläche der Maschenöffnungen der Metallnetzschicht (A) 0,001 - 10.000 mm², vorzugsweise 0,005 - 6.000 mm², insbesondere 0,010 - 4.000 mm² und der Durchmesser der Drähte der Schicht (A) 0,01 - 3,00 mm, vorzugsweise 0,05 bis 1,00 mm, insbesondere 0,10 bis 0,50 mm betragen.

3. Mehrschichtsystem nach einem der Ansprüche 1 bis 2, wobei die Schicht (A) Aluminium, Stahl, Eisen, Kupfer, Zinn, Zink, Messing, Blei oder Nickel oder eine Kombination davon, vorzugsweise Stahl oder Eisen, umfasst.

4. Mehrschichtsystem nach einem der Ansprüche 1 bis 3, wobei die Schicht (A) zur Verhinderung der Beschädigung bzw. Korrosion des Metallnetzes, vorzugsweise durch Verwendung eines Korrrosionsschutzlacks sowie von Zinn, Zink, Phosphat und/oder einer Polymerbeschichtung oberflächenbehandelt ist.

5. Mehrschichtsystem nach einem der Ansprüche 1 bis 4, wobei die Schicht (B) eine Aluminium, Stahl, Eisen, Kupfer, Zinn, Zink oder Nickel, vorzugsweise Aluminium umfassende Metallfolie ist und die Dicke der Metallfolie 1 - 400 mm, vorzugsweise 2 - 100 mm und insbesondere 2 - 50 mm beträgt.

6. Mehrschichtsystem nach einem der Ansprüche 1 bis 5, bei dem die Substratschicht (C) eine Dichte von unter 200 kg/m³, vorzugsweise von unter 150 kg/m³ und insbesondere von unter 100 kg/m³ nach ISO 845 aufweist.

7. Mehrschichtsystem nach einem der Ansprüche 1 bis 6, bei dem die Substratschicht (C) eine Wärmeleitfähigkeit von unter 0,080 W/m*K bei einer Temperatur von 0 °C, vorzugsweise von unter 0,040 Wm*K bei einer Temperatur von 0 °C nach EN ISO 12667/EN ISO 8497 aufweist.

8. Mehrschichtsystem nach einem der Ansprüche 1 bis 7, bei dem die zusätzlichen Schichten zu Verstärkungs- und/oder Dekorationszwecken aufgebracht wurden.

9. Verfahren zur Herstellung des Mehrschichtsystems nach einem der Ansprüche 1 bis 8 in einem kontinuierlichen Prozess, vorzugsweise in einem kontinuierlichen Zweistufen-Extrusions- und Laminierungs-Prozess.

10. Verwendung eines Mehrschichtsystems nach einem der Ansprüche 1 bis 8 für die Wärme-, Schall-, Schalldämm-, Schwingungsdämpfungs-, Feuerschutz- und/oder Rauchschutzisolierung.

## Revendications

1. Système multicouche comprenant un polymère expansé à titre de couche faisant office de substrat (C) recouverte d'au moins une couche de protection interne (B) comprenant un film métallique non perforé et d'au moins une couche de protection externe (A) comprenant au moins une gaze métallique.

2. Système multicouche selon la revendication 1, dans lequel l'aire de surface de l'ouverture de maille de la couche de gaze métallique (A) s'élève de 0,001 à 10,000 mm², de préférence de 0,005 à 6,000 mm², de manière particulièrement préférée de 0,010 à 4,000 mm², respectivement, et dans lequel le diamètre du fil métallique de la couche (A) s'élève de 0,01 à 3,00 mm, de préférence de 0,05 à 1,00 mm, de manière particulièrement préférée de 0,10 à 0,50 mm.

3. Système multicouche selon l'une quelconque des revendications 1 à 2, dans lequel la couche (A) comprend de l'aluminium, de l'acier, du fer, du cuivre, de l'étain, du zinc, du laiton, du plomb ou du nickel, ou l'une quelconque de leurs combinaisons, de préférence de l'acier ou du fer.

4. Système multicouche selon l'une quelconque des revendications 1 à 3, dans lequel la couche (A) est traitée en surface pour empêcher une dégradation ou une corrosion de la gaze métallique, de préférence en utilisant un vernis anticorrosion, de l'étain, du zinc, du phosphate et/ou un revêtement polymère.

5. Système multicouche selon l'une quelconque des revendications 1 à 4, dans lequel la couche (B) est un film métallique comprenant de l'aluminium, de l'acier, du fer, du cuivre, de l'étain, du zinc ou du nickel, de préférence de l'aluminium, et dans lequel l'épaisseur du film métallique s'élève de 1 à 400 microns, de préférence de 2 à 100 microns, de manière particulièrement préférée de 2 à 50 microns.

6. Système multicouche selon l'une quelconque des revendications 1 à 5, dans lequel la couche faisant office de substrat (C) possède une densité inférieure à 200 kg/m³, de préférence inférieure à 150 kg/m³, de manière particulièrement préférée inférieure à 100 kg/m³, conformément à la norme ISO 845.

7. Système multicouche selon l'une quelconque des revendications 1 à 6, dans lequel la couche faisant office de substrat (C) possède une conductivité thermique inférieure à 0,080 W/m*K à une température de 0 °C, de préférence inférieure à 0,040 W/m*K à une température de 0 °C conformément aux normes EN ISO 12667 / EN ISO 8497.

8. Système multicouche selon l'une quelconque des revendications 1 à 7, dans lequel on applique des couches supplémentaires à des fins de renforcement et/ou de décoration.

9. Procédé pour la fabrication du système multicouche selon l'une quelconque des revendications 1 à 8 dans un procédé en continu, de préférence dans un procédé en continu d'extrusion et de stratification en deux étapes.

10. Utilisation du système multicouche selon l'une quelconque des revendications 1 à 8, pour l'isolation thermique, l'isolation acoustique, l'amortissement/isolation acoustique, l'amortissement/isolation des vibrations, l'isolation procurant une protection contre l'incendie et/ou l'isolation procurant une protection contre les fumées.
